# EUROPÄISCHE PATENTSCHRIFT

(11) **EP 1 740 751 B1**
(45) Veröffentlichungstag und Bekanntmachung des Hinweises auf die Patenterteilung: **03.09.2008**
(21) Anmeldenummer: 05715432.0
(22) Anmeldetag: 22.02.2005
(51) Int. Cl.: D06F 37/20

(54) **ANLENK-VORRICHTUNG ZUR ANLENKUNG EINES SCHWINGUNGSDÄMPFERS AN EINEM WASCHAGGREGAT UND/ODER EINEM MASCHINENGESTELL EINER WASCHMASCHINE**
COUPLING DEVICE FOR COUPLING AN OSCILLATION DAMPER TO A WASHING UNIT AND/OR A MACHINE FRAME OF A WASHING MACHINE
DISPOSITIF D'ACCOUPLEMENT SERVANT A ACCOUPLER UN AMORTISSEUR DE VIBRATIONS AVEC UNE UNITE DE LAVAGE ET/OU UN BATI DE MACHINE A LAVER

(30) Priorität: 03.03.2004 DE 102004010979
(43) Veröffentlichungstag der Anmeldung: 10.01.2007
(73) Patentinhaber: SUSPA Holding GmbH, 90518 Altdorf (DE)
(72) Erfinder: WEDER, Michael, 90455 Nürnberg (DE)
(74) Vertreter: Rau, Albrecht
(86) Internationale Anmeldenummer: PCT/EP2005/001795
(87) Internationale Veröffentlichungsnummer: WO 2005/085510

(56) Entgegenhaltungen:
- EP-A- 0 217 234
- EP-A- 0 230 685
- EP-A- 0 887 456
- WO-A-98/26197
- FR-A- 482 853

## Beschreibung

Die Erfindung betrifft eine Anlenk-Vorrichtung zur Anlenkung eines Schwingungsdämpfers an einem Waschaggregat und/oder einem Maschinengestell einer Waschmaschine mit Schleudergang gemäß dem Oberbegriff des Anspruches 1.

Es ist beispielsweise aus der WO 98/26197 A1 bekannt, in Waschmaschinen das Waschaggregat über Schwingungsdämpfer gegenüber einem Maschinengestell zu dämpfen. Die Schwingungsdämpfer sind gegenüber dem Maschinengestell über Anlenk-Vorrichtungen angelenkt. Die Anlenk-Vorrichtungen zur Anlenkung des Schwingungsdämpfers an dem Waschaggregat bestehen aus einem elastischen Material und sind jeweils als Befestigungs-Stift ausgebildet. Beim Schleudern treten Oszillationen des Waschaggregats parallel und senkrecht zur Trommelachse sowie Taumelbewegungen des Waschaggregats auf. Nachteilig an diesem bekannten Befestigungs-Stift ist, dass dieser nicht dauerfest ist.

Aus der FR 482 853 ist eine Befestigungs-Vorrichtung bekannt, die eine Befestigungs-Hülse und einen in diese einschiebbaren Stift aufweist. Der Stift ist geschlitzt ausgeführt und weist einen konischen Endabschnitt auf.

Die EP 0 230 685 A2 offenbart eine Waschmaschine, deren Waschaggregat mittels Federn und Stoßdämpfern in einem Maschinengehäuse gelagert ist. Die Stoßdämpfer sind mittels einer Schraubverbindung an zwei gegeneinander federnden Wangen des Maschinengehäuses oder des Waschaggregats befestigt.

Aus der EP 0 887 456 A1 ist eine Befestigungs-Vorrichtung zur Befestigung eines Schwingungsdämpfers einer Waschmaschine bekannt, wobei die Befestigungs-Vorrichtung eine Befestigungs-Hülse aus zwei aufspreizbaren Hülsensegmenten und ein die Befestigungs-Hülse aufspreizendes Spreizelement aufweist.

Aus der EP 0 217 234 A1 ist eine Anlenk-Vorrichtung bekannt, die einen Stift aus Kunststoff aufweist.

Der Erfindung liegt daher die Aufgabe zu Grunde, eine Anlenk-Vorrichtung zur Anlenkung eines Schwingungsdämpfers an einem Waschaggregat und/oder einem Maschinengestell einer Waschmaschine bereitzustellen, die dauerfest und äußerst einfach montierbar ist.

Die Aufgabe wird durch die im kennzeichnenden Teil des Anspruches 1 aufgeführten Merkmale gelöst. Der Kern der Erfindung besteht darin, eine Anlenk-Vorrichtung bereitzustellen, die eine Befestigungs-Hülse und einen in der Befestigungs-Hülse axial festlegbaren Stift umfasst. Der Stift sorgt zusätzlich für die erforderliche Stabilität der Anlenk-Vorrichtung. Durch die mindestens eine Verbindungshaut ergibt sich eine besonders einfache Montage. Die Befestigungs-Hülse und der Stift bilden eine Einheit. Beide Komponenten sind zur Anlenkung eines Schwingungsdämpfers an einem Waschaggregat und/oder einem Maschinengestell einer Waschmaschine erforderlich. Es kann somit ausgeschlossen werden, dass eine der beiden Komponenten bei der Montage vergessen wird oder verloren geht.

Weitere vorteilhafte Ausgestaltungen der Erfindung ergeben sich aus den Unteransprüchen.

Zusätzliche Merkmale und Einzelheiten der Erfindung ergeben sich aus der Beschreibung mehrerer Ausführungsbeispiele an Hand der Zeichnung. Es zeigen:
- Fig. 1: eine Trommelwaschmaschine in schematischer Darstellung in ' Seitenansicht mit einem Schwingungsdämpfer und Anlenk-Vorrichtungen gemäß einem ersten Ausführungsbeispiel,
- Fig. 2: eine Trommelwaschmaschine gemäß Fig. 1 in Vorderansicht,
- Fig. 3: eine vergrößerte Darstellung des in Fig. 2 dargestellten Schwingungsdämpfers und der Anlenk-Vorrichtungen,
- Fig. 4: eine Ansicht einer Befestigungs-Hülse der Anlenk-Vorrichtungen,
- Fig. 5: eine Ansicht eines Stiftes der Anlenk-Vorrichtungen,
- Fig. 6: eine Ansicht der in Fig. 4 dargestellten Befestigungs-Hülse und des in Fig. 5 gezeigten Stiftes, wobei sich der Stift in einer Ausgangsposition befindet und mit der Befestigungs-Hülse verbunden ist,
- Fig. 7: eine Ansicht der in Fig. 6 dargestellten Einheit aus BefestigungsHülse und Stift, wobei der Stift aus der in Fig. 6 dargestellten Ausgangsposition in die Hülse eingeschoben ist,
- Fig. 8: einen Längsschnitt durch die in Fig. 7 dargestellte Einheit aus Befestigungs-Hülse und Stift,
- Fig. 9: eine vergrößerte Darstellung eines Schwingungsdämpfers und von Anlenk-Vorrichtungen gemäß einem zweiten Ausführungsbeispiel,
- Fig. 10: eine Ansicht einer Befestigungs-Hülse und eines Stiftes gemäß Fig. 9, wobei sich der Stift in einer Ausgangsposition befindet und mit der Befestigungs-Hülse verbunden ist,
- Fig. 11: eine Ansicht der in Fig. 10 dargestellten Einheit aus Befestigungs-Hülse und Stift, wobei der Stift aus der in Fig. 10 dargestellten Ausgangsposition in die Hülse eingeschoben ist, und
- Fig. 12: einen Längsschnitt durch die in Fig. 11 dargestellte Einheit aus Befestigungs-Hülse und Stift.

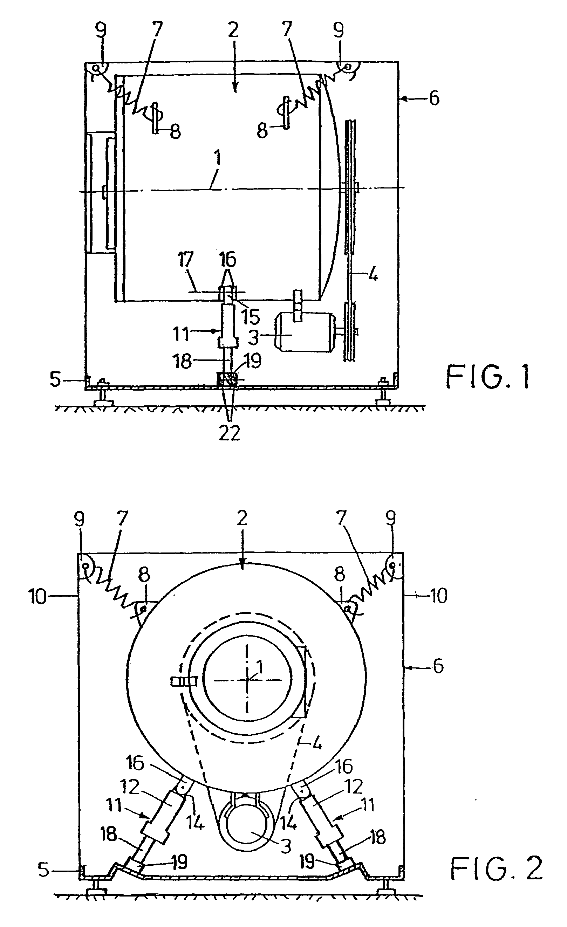

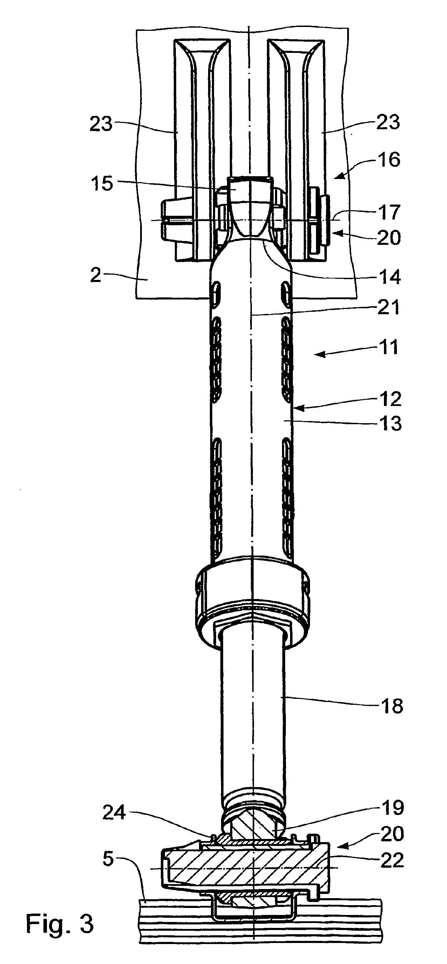

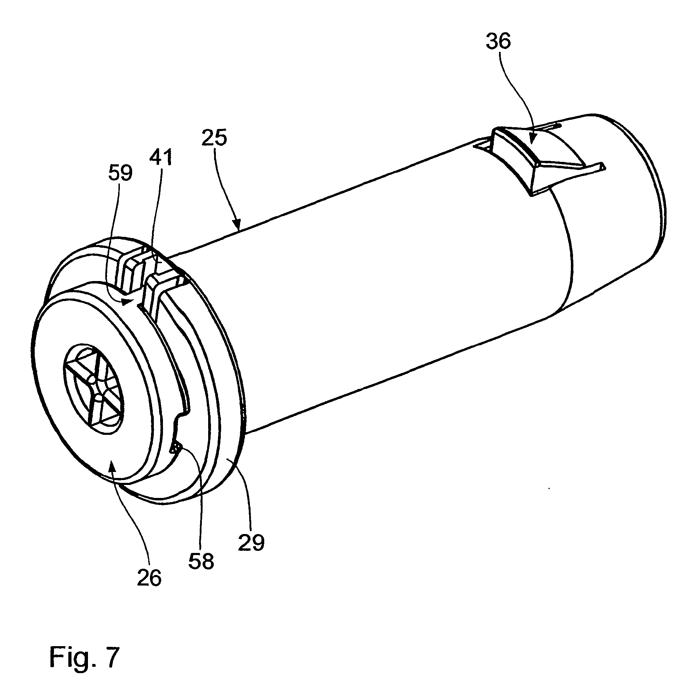

Im Folgenden wird unter Bezugnahme auf die Fig. 1 bis 8 ein erstes Ausführungsbeispiel der Erfindung beschrieben. Eine Trommelwaschmaschine mit waagrechter Trommelachse 1 weist ein schwingungsfähiges Waschaggregat 2 mit einem Antriebsmotor 3 auf, der die nicht im Einzelnen dargestellte Waschtrommel über einen Riementrieb 4 antreibt. Weitere mit dem Waschaggregat 2 verbundene Bestandteile, beispielsweise ein Getriebe, sind der Einfachheit halber nicht dargestellt. Das schwingungsfähige Waschaggregat 2 ist an einem auf einem durch einen Grundrahmen gebildeten Maschinengestell 5 abgestützten Waschmaschinen-Gehäuse 6 mittels Zugfedern 7 aufgehängt. Die Zugfedern 7 sind einerseits an Ösen 8 angebracht, die im oberen Bereich des Waschaggregats 2 angebracht sind. Andererseits sind sie an Ösen 9 aufgehängt, die an Seitenwänden 10 des Gehäuses 6 ausgebildet sind. Anstelle einer derartigen Aufhängung des Waschaggregats 2 an Zugfedern 7 kann auch eine bekannte Abstützung des Waschaggregats 2 über sogenannte Federbeine auf dem Maschinengestell 5 vorgesehen sein, wie sie aus der EP 0 108 217 B1 (entsprechend US-PS 4,991,412) bekannt sind. Entscheidend ist, dass das Waschaggregat 2 frei schwingungsfähig aufgehängt bzw. abgestützt ist.

Zwischen dem Waschaggregat 2 und dem Maschinengestell 5 sind weiterhin Schwingungsdämpfer 11 angeordnet, die beispielsweise aus der EP 0 336 176 B1 (entspricht US 4,934,493) bekannt sind. Jeder Schwingungsdämpfer 11 weist ein Gehäuse 12 auf. Das Gehäuse 12 besteht im Wesentlichen aus einem zylindrischen Rohr 13, das an einem Ende mittels eines Bodens 14 verschlossen ist.

An der Außenseite des Bodens 14 ist eine als Dämpfer-Auge 15 bezeichnete Gelenkbüchse angebracht, mittels derer der Schwingungsdämpfer 11 über eine Anlenk-Vorrichtung 20 an einem Lager 16 am Waschaggregat 2 so angebracht wird, dass der Schwingungsdämpfer 11 um eine Schwenkachse 17 relativ zum Waschaggregat 2 schwenkbar angebracht ist. Die Schwenkachse 17 verläuft parallel zu der Trommelachse 1. Das Lager 16 weist zwei voneinander beabstandete, am Waschaggregat 2 befestigte Stege 23 und in den Stegen 23 ausgebildete, miteinander fluchtende Lageröffnungen (nicht dargestellt) zur Aufnahme der Anlenk-Vorrichtung 20 auf.

Der jeweilige Schwingungsdämpfer 11 weist weiterhin einen Stößel 18 auf, der an seinem äußeren Ende ebenfalls eine als Dämpfer-Auge 19 ausgebildete Gelenkbüchse trägt. Der Stößel 18 und das Gehäuse 12 weisen eine gemeinsame Mittel-Längs-Achse 21 auf, die senkrecht zu der Schwenkachse 17 verläuft. Der Stößel 18 ist in dem Gehäuse 12 gedämpft verschiebbar. Das Dämpfer-Auge 19 des Stößels 18 ist über eine Anlenk-Vorrichtung 20 an dem Maschinengestell 5 so angebracht, dass der Schwingungsdämpfer 11 um eine Schwenkachse 22 relativ zu dem Maschinengestell 5 verschwenkbar ist. Die Schwenkachse 22 verläuft parallel zu der Trommelachse 1. Die Befestigung der Anlenk-Vorrichtung 20 an dem Maschinengestell 5 erfolgt über ein U-förmiges Stahlblech 24, das mit dem Maschinengestell 5 verbunden ist und miteinander fluchtende Lager-Öffnungen (nicht dargestellt) besitzt. Die Anlenk-Vorrichtung zur Anlenkung des oberen Dämpfer-Auges 15 an dem Lager 16 des Waschaggregats 2 und die Anlenk-Vorrichtung zur Anlenkung des unteren Dämpfer-Auges 19 zur Anlenkung an dem Maschinengestell 5 sind identisch ausgebildet. Beide tragen das Bezugszeichen 20.

Im Folgenden wird die Anlenk-Vorrichtung 20 näher beschrieben. Diese besteht aus einer äußeren Befestigungs-Hülse 25 und einem inneren Stift 26. Sowohl die Befestigungs-Hülse 25 als auch der Stift 26 bestehen aus Kunststoff.

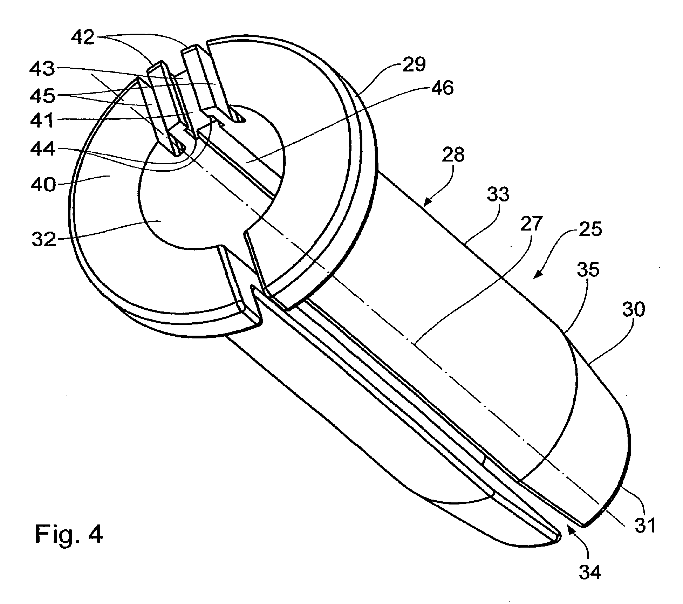

Die in Fig. 4 als Einzelteil dargestellte einstückige hohle Befestigungs-Hülse 25 weist eine Befestigungs-Hülsen-Mittel-Längs-Achse 27 auf und umfasst einen Grundkörper 28 mit kreisringförmigem Querschnitt. In einem Endbereich des Grundkörpers 28 springt von dessen Außenfläche eine Ringschulter 29 in radialer Richtung nach außen hervor. In einem der Ringschulter 29 gegenüberliegenden Endabschnitt 30 des Grundkörpers 28 verjüngt sich die Außenfläche des Grundkörpers 2 8 in Richtung auf dessen freies Ende 31. Der Endabschnitt 30 ist somit konisch ausgebildet. Der Grundkörper 28 wird von einer kreisförmigen Längs-Öffnung 32 durchsetzt, die einen konstanten Durchmesser aufweist. Der Außendurchmesser eines zwischen dem konischen Endabschnitt 30 und der Ringschulter 29 vorliegenden Lagerabschnitts 33 ist ebenfalls konstant. Der Grundkörper 28 ist geschlitzt. Ein Längs-Feder-Schlitz 34 erstreckt sich über die gesamte Länge des Grundkörpers 28 und durchdringt dessen Wandung. Der Feder-Schlitz 34 durchdringt auch die Ringschulter 29 und weist eine konstante Spaltbreite auf. Er verleiht dem Stift 26 die Möglichkeit, seinen Durchmesser geringfügig zu ändern.

In einem Übergangsbereich 35 zwischen dem Endabschnitt 30 und dem Lagerabschnitt 33 ist eine radial nach außen vorspringende Rastnase 36 vorgesehen, die dem Feder-Schlitz 34 gegenüberliegt und über einen flexiblen Raststeg 37 im Bereich des Endabschnittes 30 an dem Grundkörper 28 befestigt ist. Die Rastnase 36 weist eine der Ringschulter 29 zugewandte Anlagefläche 38 sowie eine dem freien Ende 31 zugewandte Schrägfläche 39 auf. Die Rastnase 36 ist durch eine in Richtung auf die Achse 27 wirkende Kraft nach innen federnd verschwenkbar.

Die Befestigungs-Hülse 25 weist außerdem eine Rast-Ausnehmung 41 auf. Die Rast-Ausnehmung 41 geht von einer dem freien Ende 31 abgewandten Stirnfläche 40 aus und erstreckt sich von der Öffnung 32 in radialer Richtung nach außen. Sie verläuft somit in dem Grundkörper 28 und der Ringschulter 29. Zwei Begrenzungswände 42 und ein Boden 43 begrenzen die Rast-Ausnehmung 41. Die Begrenzungswände 42 begrenzen die Rast-Ausnehmung 41 seitlich, während der Boden 43 die Rast-Ausnehmung 41 in der Tiefe begrenzt. Die Begrenzungswände 42 verlaufen beabstandet parallel zueinander und weisen Rastansätze 44 auf, die aufeinander zu springen. Auch die Rastansätze 44 sind voneinander beabstandet. An den einander abgewandten Seiten der Begrenzungswände 42 schließen sich Feder-Ausnehmungen 45 an, die ein Verschwenken der Begrenzungswände 42 voneinander weg ermöglichen.

Der Grundkörper 28 weist eine innere sich an die Öffnung 32 anschließende Längs-Führungsnut 46 auf, die dem Feder-Schlitz 34 gegenüberliegt und in der Rast-Ausnehmung 41 mündet. Die Führungsnut 46 ist nach innen offen.

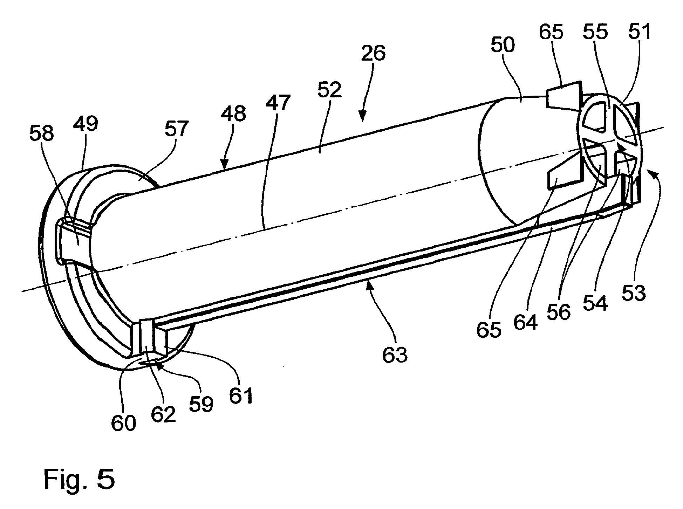

Der einstückige Stift 26, der in Fig. 5 als Einzelteil dargestellt ist, ist ebenfalls hohl und weist eine Stift-Mittel-Längs-Achse 47 auf. Er umfasst einen Grundkörper 48 mit kreisringförmigem Querschnitt. Endseitig springt eine Ringschulter 49 von der Außenfläche des Grundkörpers 48 in radialer Richtung nach außen hervor. Der Außendurchmesser der Ringschulter 49 entspricht in etwa dem Außendurchmesser des Grundkörpers 28 der Befestigungs-Hülse 25.

In einem der Ringschulter 49 gegenüberliegenden Endabschnitt 50 des Grundkörpers 48 verjüngt sich die Außenfläche des Grundkörpers 48 in Richtung auf ein benachbartes freie Ende 51. Der Endabschnitt 50 ist also konisch ausgebildet. Zwischen dem Endabschnitt 50 und der Ringschulter 49 erstreckt sich ein Grundabschnitt 52 mit konstantem Außendurchmesser. Der Außendurchmesser des Grundabschnittes 52 ist geringfügig kleiner als der Durchmesser der Öffnung 32 der Befestigungs-Hülse 25. Der Grundkörper 48 ist von einer kreisförmigen Längs-Offnung 53 durchsetzt, die einen konstanten Durchmesser aufweist. Eine innere kreuzförmige Stützstruktur 54 erstreckt sich über die gesamte Länge des Grundkörpers 48 und verleiht diesem eine hohe Steifigkeit. Die Stützstruktur 54 besteht aus Versteifungs-Streben 55, die vier Längskanäle 56 definieren. Von der dem freien Ende 51 zugewandten ringförmigen Stirnfläche 57 der Ringschulter 49 erstreckt sich eine Demontage-Ausnehmung 58. Es können auch mehrere vorgesehen sein. Diese verläuft von dem Grundkörper 48 in radialer Richtung nach außen und ist in radialer Richtung offen.

Mit der Ringschulter 49 ist ein Rast-Vorsprung 59 verbunden, der von der Ringschulter 49 in Richtung auf das freie Ende 51 verläuft und auch mit dem Grundkörper 48 in Verbindung steht. Der Rast-Vorsprung 59 weist einen mit der Ringschulter 49 und dem Grundkörper 48 verbundenen Steg 60 auf, an welchen sich ein trapezförmiger Rast-Kopf 61 anschließt. Der Rast-Kopf 61 verjüngt sich in Richtung auf das freie Ende 51. Auch der Rast-Kopf 61 steht mit dem Grundkörper 48 in Verbindung. Der größte Abstand der seitlichen gegenüberliegenden Trapezflächen 62 ist größer als der Abstand der Rastansätze 44 der Befestigungs-Hülse 25 voneinander.

Gegenüber der Außenfläche des Grundkörpers 48 springt eine Längs-Führungsschiene 63 in radialer Richtung nach außen hervor, die 90° zu der Demontage-Ausnehmung 58 versetzt ist. Die Führungsschiene 63 weist eine geringere Höhe als der Rastvorsprung 59 auf. Sie grenzt an den Rast-Kopf 61 an und verläuft bis über das freie Ende 51 des Grundkörpers 48 hinaus. Der Abstand der nach außen gewandten Fläche 64 der Führungsschiene 63 zu der Achse 47 ist konstant, d. h. die Höhe der Führungsschiene 63 nimmt in dem konischen Endabschnitt 50 in Richtung auf das freie Ende 51 zu. Die Breite der Führungsschiene 63 ist geringfügig kleiner als die Breite der Führungsnut 46.

In Fig. 5 sind außerdem vier dünne Verbindungshäute 65 oder -filme im Endabschnitt 50 dargestellt. Die Verbindungshäute 65 verlaufen von dem freien Ende 51 in Richtung auf die Ringschulter 49 und erstrecken sich von der Außenfläche des Grundkörpers 48 nach außen. Jeweils zwei Verbindungshäute 65 fluchten paarweise miteinander. Die Verbindungshaut-Paare verlaufen parallel zueinander. Nachfolgend wird auf die Verbindungshäute 65 noch näher eingegangen.

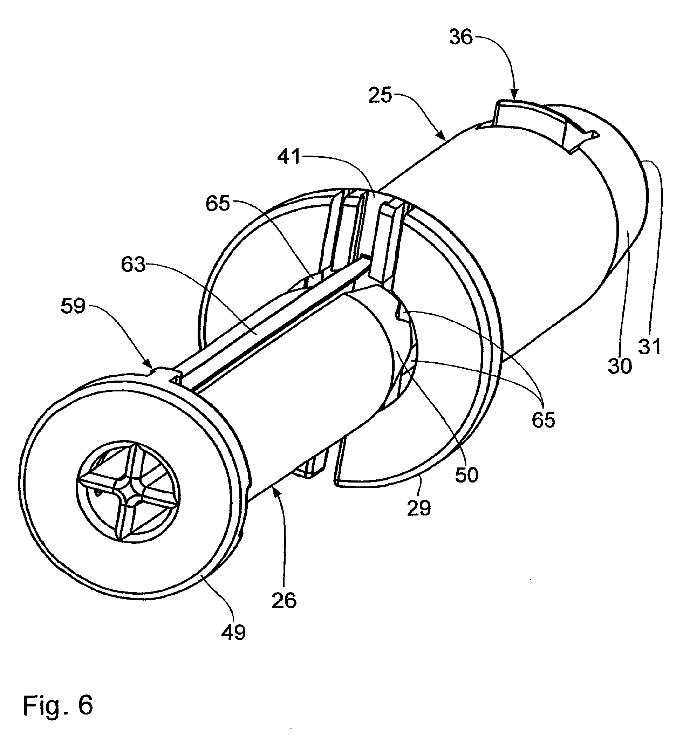

In Fig. 6 ist die Anlenk-Vorrichtung 20 in der Ausgangsposition dargestellt, wie sie aus einer Kunststoff-Spritzgussmaschine kommt und für die Waschmaschinen-Montage verwendet wird. Der Endabschnitt 50 des Stiftes 26 ragt teilweise in die Öffnung 32 der Befestigungs-Hülse 25. Die Befestigungs-Hülse 25 und der Stift 26 sind durch die dünnen gespritzten Verbindungshäute 65 einstückig miteinander verbunden. Die Verbindungshäute 65 stehen mit dem Endabschnitt 50 des Stiftes 26 und mit der Innenfläche des Grundkörpers 28 im Bereich der Ringschulter 29 in Verbindung. Ein Anfangs-Abschnitt der Führungsschiene 63 des Stiftes 26 greift in die Führungsnut 46 der Befestigungs-Hülse 25 ein. Es ist auch möglich, den Anfangs-Abschnitt der Führungsschiene 63 vor der Führungsnut 46 anzuordnen. Die Befestigungs-Hülsen-Mittel-Längs-Achse 27 fällt mit der Stift-Mittel-Längs-Achse 47 zusammen. Die Ringschulter 29 der Befestigungs-Hülse 25 ist von der Ringschulter 49 des Stiftes 26 beabstandet. Die Verbindungshäute 65 bilden eine Verliersicherung.

Im Folgenden wird die Montage und Funktionsweise der Anlenk-Vorrichtung 20 beschrieben. Zur Montage wird die in Fig. 6 dargestellte Einheit aus Befestigungs-Hülse 25 und Stift 26 herangezogen. Die Ansenkung wird nur für die Anlenkung des Schwingungsdämpfers 11 an dem Waschaggregat 2 beschrieben. Die Anlenkung des Schwingungsdämpfers 11 an dem an dem Maschinengestell 5 befestigten Stahlblech 24 erfolgt analog. Es kann hierfür ein zusätzliches Distanzstück vorgesehen sein.

Zunächst ist die Befestigungs-Hülse 25, beginnend mit dem Endabschnitt 30, in die Öffnungen der mit dem Waschaggregat 2 verbundenen Stege 23 und des Dämpfer-Auges 15 einzuschieben. Die konische Ausgestaltung des Endabschnittes 30 und der Feder-Schlitz 34 erleichtern diesen Vorgang. Beim Einschieben wird die Rastnase 36 durch die Wandungen der Öffnungen nach innen gedrückt und springt nach dem vollständigen Einschieben der Befestigungs-Hülse 25 wieder nach außen vor, sobald die Rastnase 36 die Öffnung des zweiten Steges 23 verlassen hat. Die Anlagefläche 38 ist nun benachbart zu der Außenfläche des zweiten Steges 23. Die dem freien Ende 31 zugewandte Stirnfläche der Ringschulter 29 der Befestigungs-Hülse 25 berührt die Außenfläche des ersten Steges 23. Der Schwingungsdämpfer 11 ist durch die Befestigungs-Hülse 25 zwischen den Stegen 23 angelenkt. Das Dämpfer-Auge 15 ist von dem zylindrischen Lagerabschnitt 33 der Befestigungs-Hülse 25 durchdrungen.

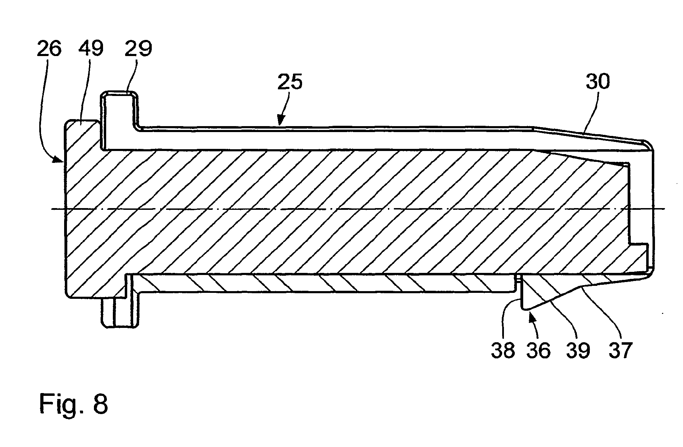

Anschließend wird eine axiale Druckkraft von außen auf den Stift 26 aufgebracht. Dabei werden die Verbindungshäute 65 zerstört, was eine Einführung des Stiftes 26 in die Befestigungs-Hülse 25 ermöglicht. Durch die in die Führungsnut 46 der Befestigungs-Hülse 25 eingreifende Führungsschiene 63 des Stiftes 26 wird eine Verdrehung der Befestigungs-Hülse 25 und des Stiftes 26 beim Einschieben zueinander verhindert. Am Ende des Einschiebvorganges des Stiftes 26 in die Befestigungs-Hülse 25 schnappt der Rast-Vorsprung 59 des Stiftes 26 in die Rast-Ausnehmung 41 der Befestigungs-Hülse 25 ein. Durch die geführte Verschiebung landet der RastVorsprung 59 direkt in der Rast-Ausnehmung 41. Eine Ausrichtung ist nicht erforderlich. Der Stift 26 ist durch diese Schnappverbindung axial in der Befestigungs-Hülse 25 festgelegt. Die Stirnfläche 57 des Stiftes 26 liegt nun an der Stirnfläche 40 der Befestigungs-Hülse 25 an. Das freie Ende 51 des eingeschobenen Stiftes 26 fluchtet nahezu mit dem freien Ende 31 der Befestigungs-Hülse 25. Ein Abschnitt des Stiftes 26 befindet sich direkt unterhalb der Rastnase 36. Ein Eindrücken der Rastnase 3 6 bzw. ein Lösen der Verbindung zwischen dem Waschaggregat 2 und dem Schwingungsdämpfer 11 ist somit bei eingeschobenem Stift 26 nicht möglich. Bei der Montage wird somit die Einheit aus der Befestigungs-Hülse 25 und dem Stift 26 aus der in Fig. 6 dargestellten Ausgangsposition in die in Fig. 8 dargestellte Arretierposition überführt. Die Achsen 27 und 47 fluchten sowohl in der Ausgangsposition als auch in der Arretierposition.

Um den Stift 26 wieder aus der Befestigungs-Hülse 25 zu ziehen, ist ein geeignetes Werkzeug, beispielsweise ein Schraubenzieher, in die Demontage-Ausnehmung 58 einzuführen und eine entsprechende Hebelkraft auf den Befestigungs-Stift 26 aufzubringen. Durch die Hebelkraft wird die Haltekraft zwischen dem Rast-Vorsprung 59 und der Rast-Ausnehmung 41 überwunden.

Gemäß weiteren Ausführungsformen der Erfindung sind andere Anordnungen der Verbindungshäute 65 vorgesehen. Wichtig bezüglich der Verbindungshäute ist lediglich, dass diese die Befestigungs-Hülse 25 und den Stift 26 sicher, aber lösbar miteinander verbinden und eine gegenseitige Verdrehung derselben verhindern. Hierfür ist bereits eine einzige Verbindungshaut ausreichend, wenn sich die Führungsschiene 63 in der Führungsnut 46 abstützt. Erfindungsgemäß ist mindestens eine Verbindungshaut zum Verbinden von Befestigungs-Hülse 25 und Stift 26 vorgesehen. Die Verbindungshäute können sich auch entlang von Kreisring-Abschnitten erstrecken oder punktförmig ausgebildet sein.

Im Gegensatz zu den herkömmlichen Anlenk-Vorrichtungen, wie eine beispielsweise aus der WO 98/26197 A1 bekannt ist, ermöglicht die erfindungsgemäße Anlenk-Vorrichtung 20 eine schnelle und gegebenenfalls auch automatische Montage und einfache Demontage. Die Anlenk-Vorrichtung 20 ermöglicht eine Anbindung an Stahl und Kunststoff. Sie weist ein äußerst gutes Geräuschverhalten bei laufender Waschmaschine auf. Außerdem zeichnet sie sich durch ihre äußerst hohe Belastbarkeit und ihre kostengünstige Fertigung aus. Zum Ausgleich von Fertigungstoleranzen kann der Stift 26, wie im nachfolgenden Ausführungsbeispiel, elastisch ausgebildet sein. Insbesondere kann die kreuzförmige Stützstruktur 54 auch fehlen.

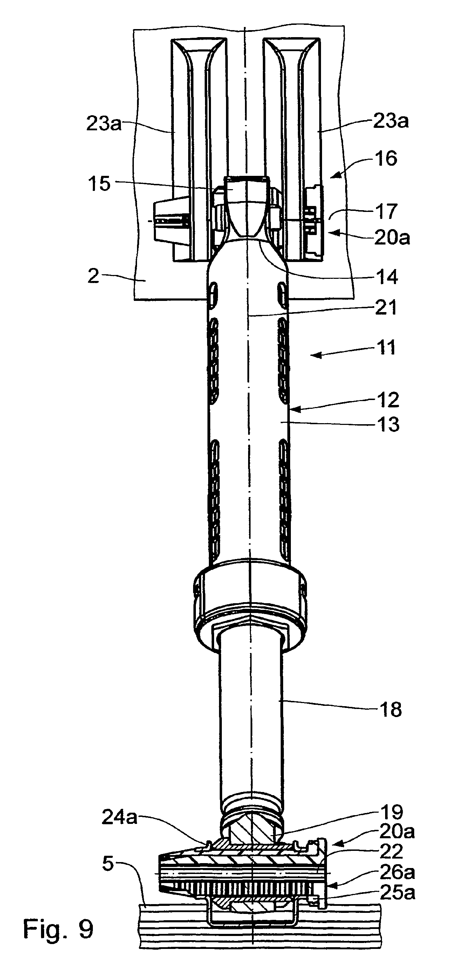

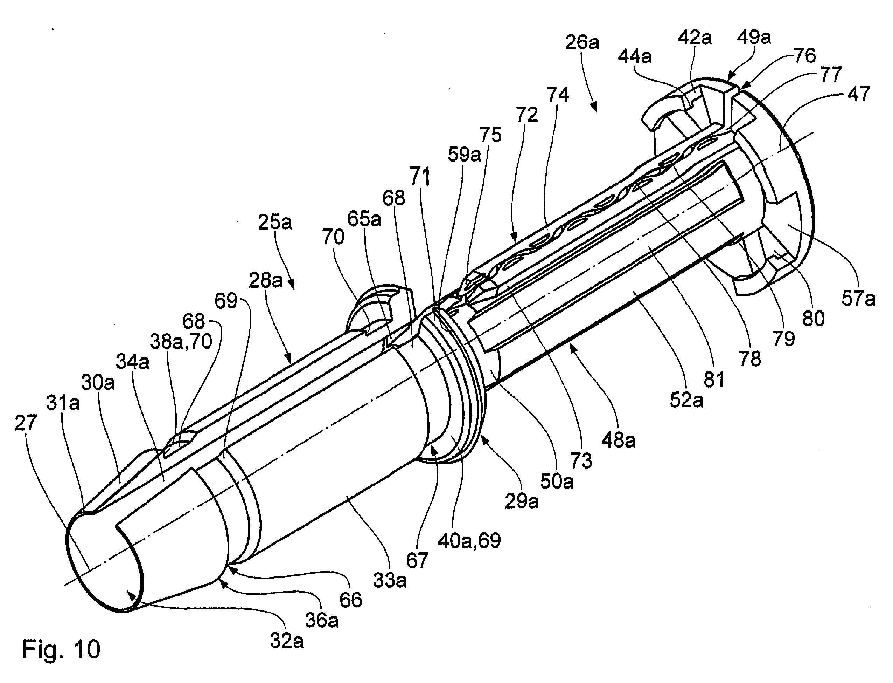

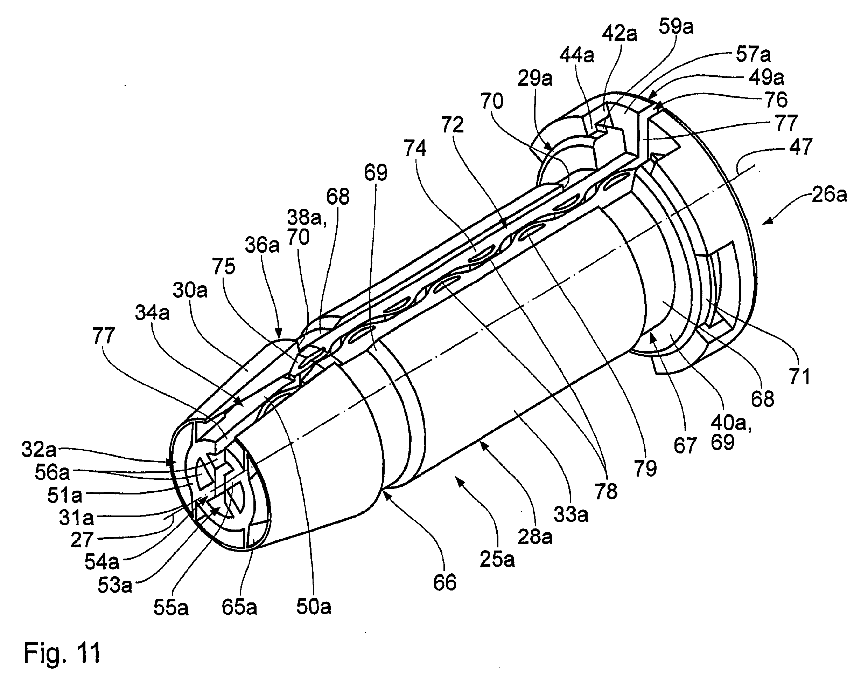

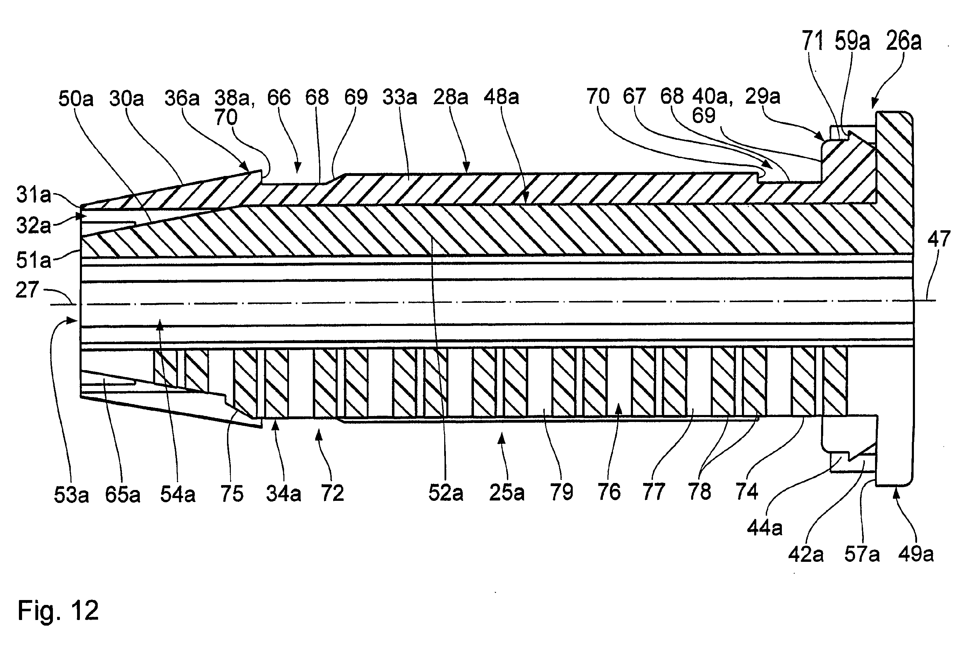

Im Folgenden wird unter Bezugnahme auf die Fig. 9 bis 12 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten "a". In Fig. 10 ist die Anlenk-Vorrichtung 20a in der Ausgangsposition dargestellt, wie sie aus einer Kunststoff-Spritzgussmaschine kommt und für die Waschmaschinen-Montage verwendet wird. Der Grundkörper 28a weist eine umlaufende erste Ringnut 66 und eine von dieser beabstandete, umlaufende zweite Ringnut 67 auf. Jede der Ringnuten 66, 67 weist einen Ringnut-Boden 68 und eine daran angrenzende erste Ringnut-Schulter 69 sowie eine dieser gegenüberliegende und an den Ringnut-Boden 68 angrenzende zweite Ringnut-Schulter 70 auf.

Die erste Ringnut 66 ist unmittelbar angrenzend an den Endabschnitt 30a des Grundkörpers 28a angeordnet. Die erste Ringnut-Schulter 69 der Ringnut 66 wird mit dem Lagerabschnitt 33a des Grundkörpers 28a ausgebildet, der im Vergleich zu einem Außendurchmesser des Ringnut-Bodens 68 einen größeren Außendurchmesser aufweist. Die erste Ringnut-Schulter 69 verläuft in Richtung des Lagerabschnitts 33a rampenförmig. Die zweite Ringnut-Schulter 70 wird mit dem sich verjüngenden Endabschnitt 30a derart ausgebildet, dass der Endabschnitt 30a gleichzeitig als umlaufende Rastnase 36a dient. Die Anlagefläche 38a der Rastnase 36a ist somit mit der zweiten Ringnut-Schulter 70 der ersten Ringnut 66 identisch. Die zweite Ringnut 67 ist unmittelbar angrenzend zu der Ringschulter 29a angeordnet. Die erste Ringnut-Schulter 69 der Ringnut 67 wird mit der dem Grundkörper 28a zugewandten Stirnfläche 40a ausgebildet. Die zweite Ringnut-Schulter 70 wird mit dem Lagerabschnitt 33a gebildet.

Der Abstand der Ringnuten 66, 67 ist derart gewählt, dass beim Einführen der Befestigungs-Hülse 25a durch die Öffnungen des Stahlblechs 24a die Ringnuten 66, 67 im Bereich der Öffnungen zu liegen kommen. Der Außendurchmesser der Ringnuten 66, 67 im Bereich des Ringnut-Bodens 68 entspricht im Wesentlichen dem Innendurchmesser der Öffnungen des Stahlblechs 24a. Der Außendurchmesser des Lagerabschnitts 33a entspricht im Wesentlichen dem Innendurchmesser des Dämpfer-Auges 19, wobei der Innendurchmesser des Dämpfer-Auges 19 im Vergleich zu dem Innendurchmesser der Öffnungen des Stahlblechs 24a größer ist. Der Längs-Feder-Schlitz 34a erstreckt sich wie im ersten Ausführungsbeispiel über die gesamte Länge des Grundkörpers 28a und durchdringt dessen Wandung sowie die Ringschulter 29a.

Die Ringschulter 29a weist an ihrer Außenwand 71 den Rast-Vorsprung 59a auf, der um die Ringschulter 29a umläuft und in Richtung der Ringnuten 66, 67 rampenförmig zuläuft. Der Rast-Vorsprung 59 erstreckt sich in Richtung der Ringnuten 66, 67 bis ungefähr zu der Mitte der Ringschulter 29a, wobei der Rast-Vorsprung 59a mit der Außenwand 71 eine Hinterschneidung bildet.

Der Stift 26a ist mittels der Verbindungshäute 65a mit der Befestigungs-Hülse 25a verbunden. Eine Ausgleichs-Schiene 72 erstreckt sich entlang der Stift-Mittel-Längs-Achse 47 im Bereich des Grundabschnitts 52a und fluchtet mit dem Feder-Schlitz 34a. Die Breite und Höhe der Ausgleichs-Schiene 72 ist derart gewählt, dass die Ausgleichs-Schiene 72 mit ihren Seitenwänden 73 im eingeschobenen Zustand an der Befestigungs-Hülse 25a anliegt und mit ihrer Außenwand 74 mit den Ringnut-Böden 68 der ersten und zweiten Ringnut 66, 67 fluchtet. Die Seitenwände 73 laufen an einem der Befestigungs-Hülse 25a zugewandten Ende 75 der Ausgleichs-Schiene 72 keilförmig aufeinander zu. Gleichzeitig ist die Außenwand 74 der Ausgleichs-Schiene 72 an diesem Ende 75 keilförmig in Richtung der Befestigungs-Hülse 25a abgeschrägt.

Der Stift 26a weist entlang der Stift-Mittel-Längs-Achse 47 einen Stift-Feder-Schlitz 76 auf, der sich über die gesamte Länge des Stiftes 26a erstreckt und die Wandung des Grundkörpers 48a im Bereich des Endabschnitts 50a und des Grundabschnitts 52a sowie die Ringschulter 49a durchbricht. Der Stift-Feder-Schlitz 76 bildet in dem Grundkörper 48a und der Ringschulter 49a einen Spalt mit konstanter Breite aus. Der Stift-Feder-Schlitz 76 verläuft mittig durch die Ausgleichs-Schiene 72 und durchbricht diese ebenfalls. Durch den Stift-Feder-Schlitz 76 werden in dem Stift 26a zwei einander gegenüberliegende Innenwände 77 gebildet. An den Innenwänden 77 sind im Bereich des Grundkörpers 48a und der Ausgleichs-Schiene 72 jeweils mehrere benachbart und beabstandet angeordnete Ausgleichs-Elemente 78 vorgesehen. Jedes Ausgleichs-Element 78 erstreckt sich im Wesentlichen senkrecht zu der Stift-Mittel-Längs-Achse 47 und ist derart bogenförmig ausgebildet, dass es mit der jeweiligen Innenwand 77 einen Hohlraum 79 umschließt. Die Ausgleichs-Elemente 78 sind einstückig mit dem Stift 26a verbunden. Der Abstand und die Höhe der Ausgleichs-Elemente 78 ist derart, dass sich ein Ausgleichs-Element 78 zwischen zwei benachbart angeordnete Ausgleichs-Elemente 78 der gegenüberliegenden Innenwand 77 erstreckt und an der Innenwand 77 anliegt.

Die innerhalb der kreisförmigen Längs-Öffnung 53a angeordnete Stützstruktur 54a mit den Versteifungsstreben 55a wird von dem Stift-Feder-Schlitz 76 ebenfalls durchbrochen, sodass die Stützstruktur 54a jeweils zwei miteinander verbundene Versteifungsstreben 55a aufweist. Durch den Stift-Feder-Schlitz 76 sind zwei der Längskanäle 56a miteinander verbunden.

An der Stirnfläche 57a der Ringschulter 49a sind mehrere, rotationssymmetrisch angeordnete Rastansätze 44a mittels Begrenzungswänden 42a befestigt. Die Begrenzungswände 42a erstrecken sich entlang der Stift-Mittel-Längs-Achse 47 mit einer Länge derart, dass in eingeschobenem Zustand die Rastansätze 44a mit dem umlaufenden Rast-Vorsprung 59a der Ringschulter 29a verrasten. Jeder Rastansatz 44a erstreckt sich über ein Winkelsegment, dass dem Winkelsegment entspricht, mit dem jeweils zwei benachbarte Rastansätze 44a beabstandet sind. Zur Abstützung der Begrenzungswände 42a sind sich in radialer Richtung erstreckende und rampenförmig zu den Begrenzungswänden 42a zulaufende Abstützungen 80 vorgesehen. Im Bereich des Grundabschnitts 52a weist der Stift 26a mehrere über den Umfang verteilte und sich entlang der Stift-Mittel-Längs-Achse 47 erstreckende Ausnehmungen 81 zur Reduzierung der Reibung beim Einführen des Stiftes 26a auf.

Zur Montage der Anlenk-Vorrichtung 20a wird die Befestigungs-Hülse 25a beginnend mit dem konischen Endabschnitt 30a in die Öffnungen der Stege 23a und des Dämpfer-Auges 15 eingeschoben. Der Feder-Schlitz 34a ermöglicht beim Einschieben, dass die Wandungen der Befestigungs-Hülse 25a in radialer Richtung zusammengepresst werden. Erreicht die erste Ringnut 66 die Öffnung des ersten Steges 23a, entspannt sich die Befestigungs-Hülse 25a in radialer Richtung und die erste Ringnut 66 verrastet zunächst in dem ersten Steg 23a. Beim weiteren Einschieben der Befestigungs-Hülse 25a wird diese wieder in radialer Richtung zusammengepresst, wobei die abgeschrägte Ausgestaltung der ersten Ringnut-Schulter 69 der Ringnut 66 das weitere Einschieben erleichtert. Erreicht die erste Ringnut 66 den zweiten Steg 23a, so erreicht gleichzeitig die zweite Ringnut 67 den ersten Steg 23a, sodass beide Ringnuten 66, 67 in den Öffnungen der Stege 23a verrasten. Beim Verrasten entspannt sich die Befestigungs-Hülse 25a wieder in radialer Richtung. Die Befestigungs-Hülse 25a ist nun entlang der Befestigungs-Hülsen-Mittel-Längs-Achse 27 durch die ersten Ringnut-Schultern 69 und zweiten Ringnut-Schultern 70, welche als umlaufende Rastnasen 36a dienen, gegen Verschiebung gesichert.

Durch eine axiale Druckkraft wird der Stift 26a in die Befestigungs-Hülse 25a eingeschoben, wobei die Verbindungshäute 65a zerstört werden. Beim Einschieben wird die Ausgleichs-Schiene 72 in den Feder-Schlitz 34a eingeführt, wodurch eine Verdrehung der Befestigungs-Hülse 25a und des Stiftes 26a verhindert wird. Das Einführen der Ausgleichs-Schiene 72 wird durch das keilförmige Ende 75 erleichtert. Am Ende des Einschiebevorgangs schnappen die Rastansätze 44a des Stiftes 26a über den umlaufenden Rast-Vorsprung 59a der Befestigungs-Hülse 25a. Durch diese Rastverbindung ist der Stift entlang der Stift-Mittel-Längs-Achse 47 festgelegt. Die rampenförmige Ausgestaltung des Rast-Vorsprungs 59a erleichtert den Einrastvorgang. Durch den eingeschobenen Stift 26a ist die Befestigungs-Hülse 25a in radialer Richtung nicht zusammenpressbar, sodass ein selbsttätiges Lösen der Anlenk-Vorrichtung 20a nicht möglich ist. Die Demontage des Stiftes 26a und der Befestigungs-Hülse 25a erfolgt entsprechend dem ersten Ausführungsbeispiel.

Zum Ausgleich von Fertigungstoleranzen der Anlenk-Vorrichtung 20a sowie der Dämpfer-Augen 15, 19 und der Stege 23a oder des Stahlblechs 24a ist im Unterschied zu dem ersten Ausführungsbeispiel auch der Stift 26a geschlitzt ausgeführt. Der Stift-Feder-Schlitz 76 ermöglicht auch im eingeschobenen Zustand des Stiftes 26a ein zum Toleranzausgleich erforderliches Zusammenpressen der Befestigungs-Hülse 25a in radialer Richtung. Die Ausgleichs-Elemente 78 dienen zur Erhaltung der Steifigkeit der Anlenk-Vorrichtung 20a. Für den Fall, dass kein Toleranzausgleich erforderlich ist, liegen die Ausgleichs-Elemente 78 an der jeweils gegenüberliegenden Innenwand 77 an. Ist ein Toleranzausgleich erforderlich, wird die Befestigungs-Hülse 25a und infolge dessen auch der Stift 26a in radialer Richtung zusammengepresst. Die Ausgleichs-Elemente 78 werden an die jeweils gegenüberliegende Innenwand 77 gepresst, wobei die Ausgleichs-Elemente 78 in Richtung des Hohlraumes 79 nachgeben. Durch die steife Ausbildung der Ausgleichs-Elemente 78 ist ein Nachgeben jedoch nur bis zu einem gewünschten Maß möglich, sodass die Ausgleichs-Elemente 78 die Steifigkeit des Stiftes 26a erhalten und das radiale Zusammenpressen begrenzen. Die Anlenk-Vorrichtung 20a weist ein äußerst gutes Geräuschverhalten bei laufender Waschmaschine und eine äußerst hohe Belastbarkeit bei gleichzeitig kostengünstiger Fertigung auf.

## Patentansprüche

1. Anlenk-Vorrichtung zur Anlenkung eines an mindestens einem Ende ein Dämpfer-Auge (15, 19) tragenden Schwingungsdämpfers (11) an einem Waschaggregat (2) und/oder einem Maschinengestell (5) einer Waschmaschine mit Schleudergang
a) mit einer Befestigungs-Hülse (25; 25a) zur Aufnahme in einem Dämpfer-Auge (15, 19), und
b) mit einem eine Stift-Mittel-Längs-Achse (47) aufweisenden Stift (26; 26a) zur Einführung in die Befestigungs-Hülse (25; 25a),
c) wobei der Stift (26; 26a) von einer Ausgangsposition in eine Arretierposition durch Einschieben in die Befestigungs-Hülse (25; 25a) überführbar ist und der Stift (26; 26a) gegenüber der Befestigungs-Hülse (25; 25a) in der Arretierposition axial festlegbar ist,
**dadurch gekennzeichnet, dass**
d) der Stift (26; 26a) und die Befestigungs-Hülse (25; 25a) in der Ansgangs position über mindestens eine Verbindungshaut (65; 65a) lösbar miteinander verbunden sind.

2. Anlenk-Vorrichtung nach Anspruch 1, **dadurch gekennzeichnet, dass** die Befestigungs-Hülse (25; 25a) ein Rast-Element (36; 36a) zur Festlegung des Dämpfer-Auges (15, 19) auf der Befestigungs-Hülse (25; 25a) aufweist.

3. Anlenk-Vorrichtung nach Anspruch 1 oder 2, **dadurch gekennzeichnet, dass** die Befestigungs-Hülse (25; 25a) und der in der Befestigungs-Hülse (25; 25a) eingeführte Stift (26; 26a) miteinander verrastbar sind.

4. Anlenk-Vorrichtung nach einem der Ansprüche 1 bis 3, **dadurch gekennzeichnet, dass** der Stift (26; 26a) eine Führungsschiene (63; 63a) zum Eingreifen in eine in der Befestigungs-Hülse (25; 25a) ausgebildete Führungsnut (46; 46a) aufweist.

5. Anlenk-Vorrichtung nach Anspruch 4, **dadurch gekennzeichnet, dass** der Stift (26; 26a) unverdrehbar gegenüber der Befestigungs-Hülse (25; 25a) entlang seiner Stift-Mittel-Längs-Achse (47) in die Befestigungs-Hülse (25; 25a) einschiebbar ist.

6. Anlenk-Vorrichtung nach einem der Ansprüche 1 bis 5, **dadurch gekennzeichnet, dass** der Stift (26; 26a) innere Versteifungs-Streben (55; 55a) aufweist.

7. Anlenk-Vorrichtung nach einem der Ansprüche 1 bis 6, **dadurch gekennzeichnet, dass** der Stift (26; 26a) und die Befestigungs-Hülse (25; 25a) einstückig aus Kunststoff spritzbar sind.

8. Anlenk-Vorrichtung nach einem der Ansprüche 1 bis 7, **dadurch gekennzeichnet, dass** zum Toleranzausgleich die Befestigungs-Hülse (25a) und/oder der Stift (26a) jeweils einen sich entlang der Stift-Mittel-Längs-Achse (47) erstreckenden Feder-Schlitz (34a, 76) aufweisen.

9. Anlenk-Vorrichtung nach Anspruch 8, **dadurch gekennzeichnet, dass** innerhalb des Feder-Schlitzes (76) zumindest teilweise flexible Ausgleichs-Elemente (78) angeordnet sind.

## Claims

1. Coupling device for coupling an oscillation damper (11) to a washing aggregate (2) and/or a machine frame (5) of a spin-drying washing machine, the oscillation damper (11) comprising a damper eye (15, 19) on at least one end thereof, the coupling device comprising
a) a fastening sleeve (25; 25a) for accommodation in a damper eye (15, 19), and
b) a pin (26; 26a) having a central longitudinal pin axis (47) for insertion into the fastening sleeve (25; 25a),
c) wherein the pin (26; 26a) is transferable from an initial position into a locking position by insertion into the fastening sleeve (25; 25a), and the pin (26; 26a) may be axially fixed relative to the fastening sleeve (25; 25a) in the locking position,
**characterised in that**
d) in the initial position, the pin (26; 26a) and the fastening sleeve (25; 25a) are detachably connected to each other by means of at least one connection film (65; 65a).

2. Coupling device according to claim 1, **characterised in that** the fastening sleeve (25; 25a) comprises a locking member (36; 36a) for fixing the damper eye (15, 19) to the fastening sleeve (25; 25a).

3. Coupling device according to claim 1 or 2, **characterised in that** the fastening sleeve (25; 25a) and the pin (26; 26a) inserted into the fastening sleeve (25; 25a) are interlockable with one another.

4. Coupling device according to one of claims 1 to 3, **characterised in that** the pin (26; 26a) comprises a guide rail (63; 63a) which may engage with a guide groove (46; 46a) in the fastening sleeve (25; 25a).

5. Coupling device according to claim 4, **characterised in that** the pin (26; 26a) is insertable into the fastening sleeve (25; 25a) along its central longitudinal pin axis (47) so as to be non-rotational in relation to the fastening sleeve (25; 25a).

6. Coupling device according to one of claims 1 to 5, **characterised in that** the pin (26; 26a) comprises inner reinforcing struts (55; 55a).

7. Coupling device according to one of claims 1 to 6, **characterised in that** the pin (26; 26a) and the fastening sleeve (25; 25a) are injection-mouldable from plastic material such as to form one piece.

8. Coupling device according to one of claims 1 to 7, **characterised in that** the fastening sleeve (25a) and/or the pin (26a) each comprise one spring slot (34a, 76) extending along the central longitudinal pin axis (47) for tolerance compensation.

9. Coupling device according to claim 8, **characterised in that** compensation members (78) are disposed in the spring slot (76), the compensation members (78) being at least partially flexible.

## Revendications

1. Dispositif d'articulation destiné à articuler un amortisseur de vibrations (11) portant sur au moins une extrémité un oeillet d'amortisseur (15, 19) sur un groupe de lavage (2) et/ou un bâti de machine (5) d'une machine à laver à cycle d'essorage
a) doté d'un manchon de fixation (25 ; 25a) destiné à être reçu dans un oeillet d'amortisseur (15, 19), et
b) doté d'une broche (26 ; 26a) comprenant un axe longitudinal médian de broche (47), destinée à être introduite dans le manchon de fixation (25 ; 25a),
c) la broche (26 ; 26a) pouvant passer d'une position de départ dans une position d'arrêt en étant introduite dans le manchon de fixation (25 ; 25a) et la broche (26 ; 26a) pouvant être fixée axialement dans la position d'arrêt par rapport au manchon de fixation (25 ; 25a),
**caractérisé en ce que**
d) la broche (26 ; 26a) et le manchon de fixation (25 ; 25a) sont reliés l'un à l'autre de manière amovible dans la position de départ par au moins une membrane de liaison (65 ; 65a).

2. Dispositif d'articulation selon la revendication 1, **caractérisé en ce que** le manchon de fixation (25 ; 25a) comprend un élément d'encliquetage (36 ; 36a) destiné à fixer l'oeillet d'amortisseur (15, 19) sur le manchon de fixation (25 ; 25a).

3. Dispositif d'articulation selon la revendication 1 ou 2, **caractérisé en ce que** le manchon de fixation (25 ; 25a) et la broche (26 ; 26a) introduite dans le manchon de fixation (25 ; 25a) peuvent être enclenchés l'un avec l'autre.

4. Dispositif d'articulation selon l'une quelconque des revendications 1 à 3, **caractérisé en ce que** la broche (26 ; 26a) comprend un rail de guidage (63 ; 63a) destiné à se mettre en prise dans une rainure de guidage (46 ; 46a) conçue dans le manchon de fixation (25 ; 25a).

5. Dispositif d'articulation selon la revendication 4, **caractérisé en ce que** la broche (26 ; 26a) peut être introduite de manière à ne pas tourner par rapport au manchon de fixation (25 ; 25a) le long de son axe longitudinal médian de broche (47) dans le manchon de fixation (25 ; 25a).

6. Dispositif d'articulation selon l'une quelconque des revendications 1 à 5, **caractérisé en ce que** la broche (26 ; 26a) comprend des étais de renforcement internes (55 ; 55a).

7. Dispositif d'articulation selon l'une quelconque des revendications 1 à 6, **caractérisé en ce que** la broche (26 ; 26a) et le manchon de fixation (25 ; 25a) peuvent être injectés en une seule pièce en matière plastique.

8. Dispositif d'articulation selon l'une quelconque des revendications 1 à 7, **caractérisé en ce que** pour compenser les tolérances le manchon de fixation (25a) et/ou la broche (26a) comprennent respectivement une fente de ressort (34a, 76) s'étendant le long de l'axe longitudinal médian de broche (47).

9. Dispositif d'articulation selon la revendication 8, **caractérisé en ce que** des éléments de compensation (78) au moins en partie flexibles sont disposés à l'intérieur de la fente de ressort (76).
